(19) Europäisches Patentamt
European Patent Office
Office européen des brevets

(11) **EP 3 882 302 A1**

(12) **EUROPEAN PATENT APPLICATION**
published in accordance with Art. 153(4) EPC

(43) Date of publication:
**22.09.2021 Bulletin 2021/38**

(51) Int Cl.:
***C08J 5/00*** *(2006.01)*    ***G01N 23/2055*** *(2018.01)*
***G01N 23/207*** *(2018.01)*

(21) Application number: **19884643.8**

(22) Date of filing: **30.10.2019**

(86) International application number:
**PCT/JP2019/042562**

(87) International publication number:
**WO 2020/100591 (22.05.2020 Gazette 2020/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.11.2018 JP 2018214794
10.01.2019 JP 2019002433**

(71) Applicant: **SUMITOMO CHEMICAL COMPANY,
LIMITED**
**Chuo-ku
Tokyo 104-8260 (JP)**

(72) Inventors:
• **BANDO, Akinori**
**Tsukuba-shi, Ibaraki 300-3294 (JP)**
• **KADOYA, Hidenori**
**Niihama-shi, Ehime 792-8521 (JP)**
• **TAKAGI, Yasuyuki**
**Tokyo 103-0016 (JP)**
• **YASUTOMI, Yoichi**
**Niihama-shi, Ehime 792-8521 (JP)**

(74) Representative: **Winter, Brandl - Partnerschaft
mbB**
**Alois-Steinecker-Straße 22
85354 Freising (DE)**

(54) **MOLDED ARTICLE AND METHOD FOR PRODUCING SAME**

(57)    There is provided a molded article containing an amorphous resin, wherein a peak position change rate r (%) of the molded article defined by Equation: Peak position change rate $r (\%) = 100 \times (Q1-Q2)/Q2$ is 1 or more. In the equation, Q1 and Q2 are peak positions ($nm^{-1}$) of the molded article and a predetermined reference molded article, respectively, the peak position being determined by a wide angle X-ray diffraction method. The peak position is a peak derived from the amorphous resin in a scattering vector magnitude Q-intensity profile calculated from a diffraction image obtained by a transmission method and measured by the wide angle X-ray diffraction method and obtained after background correction and transmittance correction, and the peak position is a value of Q at a peak at which Q is the smallest among peaks at which Q is in a range of 5 $nm^{-1}$ to 25 $nm^{-1}$.

**Description**

TECHNICAL FIELD

The present invention relates to a molded article containing an amorphous resin and a production method of the same.

BACKGROUND ART

In recent years, a transparent molded article excellent in a mechanical strength such as rigidity has been developed to be applied for use requiring transparency and a mechanical strength.

For example, JP-A-2004-051681 (Patent Document 1) discloses that a highly rigid nanocomposite resin composition is obtained by subjecting a silica particle to surface modification using a resin monomer having a hydrogen bonding functional group and an unsaturated double bond group, blending the surface-modified silica particle with a mixed solution containing methyl methacrylate, a polymerization initiator, and a solvent, and polymerizing the resin monomer of the surface-modified silica particle and the methyl methacrylate.

PRIOR ART DOCUMENT

PATENT DOCUMENT

Patent Document 1: JP-A-2004-051681

SUMMARY OF THE INVENTION

PROBLEMS TO BE SOLVED BY THE INVENTION

A molded article formed of the nanocomposite resin composition described in Patent Document 1 is excellent in rigidity, but the molded article is not satisfactory in terms of impact resistance.

An object of the present invention is to provide a molded article containing an amorphous resin and having excellent rigidity and impact resistance.

MEANS FOR SOLVING THE PROBLEMS

The present invention provides a molded article and a production method of the molded article that are shown below.

[1] A molded article containing an amorphous resin,
wherein a peak position change rate r (%) of the molded article defined by the following Equation (1) is 1 or more,

$$\text{Peak position change rate r (\%)} = 100 \times (Q1-Q2)/Q2 \quad (1)$$

in Equation (1),

Q1 is a peak position ($nm^{-1}$) of the molded article determined by a wide angle X-ray diffraction method, and Q2 is a peak position ($nm^{-1}$) of a reference molded article determined by the wide angle X-ray diffraction method, the reference molded article is a molded article obtained by heat-treating the molded article at (Tg + 30)°C for 1 hour, in which Tg(°C) is a glass transition temperature of the amorphous resin, and
the peak position is a peak derived from the amorphous resin in a scattering vector magnitude Q-intensity profile calculated from a diffraction image obtained by a transmission method and measured by the wide angle X-ray diffraction method and obtained after background correction and transmittance correction, and the peak position is a value of Q at a peak at which Q is the smallest among peaks at which Q is in a range of 5 $nm^{-1}$ to 25 $nm^{-1}$.

[2] The molded article according to [1], wherein an absolute value of a degree of orientation in a thickness direction of the molded article is 0.02 or more.

[3] The molded article according to [1] or [2], wherein a viscosity average molecular weight of the amorphous resin is 1,000,000 or more.

[4] The molded article according to [1] or [2], wherein a weight average molecular weight of the amorphous resin is 400,000 or more.

[5] The molded article according to any one of [1] to [4], wherein the amorphous resin is a (meth)acrylic resin.

[6] The molded article according to [5], wherein the (meth)acrylic resin has a structural unit derived from a methacrylic acid ester.

[7] The molded article according to [6], wherein the (meth)acrylic resin further has a structural unit derived from a (meth)acrylic acid.

[8] The molded article according to any one of [1] to [7], wherein the amorphous resin does not have a structural unit derived from a silica particle having a polymerizable functional group.

[9] A molded article containing a (meth)acrylic resin,

wherein a peak position Q1 of the molded article determined by a wide angle X-ray diffraction method is 9.55 $nm^{-1}$ or more, and

the peak position Q1 ($nm^{-1}$) is a peak derived from the (meth)acrylic resin in a scattering vector magnitude Q-intensity profile calculated from a diffraction image obtained by a transmission method and measured by the wide angle X-ray diffraction method and obtained after background correction and transmittance correction, and the peak position Q1 ($nm^{-1}$) is a value of Q at a peak at which Q is the smallest among peaks at which Q is in a range of 5 $nm^{-1}$ to 25 $nm^{-1}$.

[10] The molded article according to [9], wherein the (meth)acrylic resin does not have a structural unit derived from a silica particle having a polymerizable functional group.

[11] A production method of a molded article, the method including:

a step of preparing a laminate including a first layer formed of a first thermoplastic resin, a second layer formed of a second thermoplastic resin which is an amorphous resin, and a third layer formed of a third thermoplastic resin in this order;

a step of performing a press stretching treatment on the laminate at a temperature of (Tg + 20)°C or lower [Tg is a glass transition temperature of the second thermoplastic resin]; and

a step of peeling and removing the first layer and the third layer.

[12] The production method of a molded article according to [11], further including a holding step of holding the molded article obtained by the step of performing the press stretching treatment at a temperature lower than a press stretching temperature and higher than the glass transition temperature of the second thermoplastic resin.

[13] The production method according to [11] or [12], wherein the second thermoplastic resin is a (meth)acrylic resin.

EFFECT OF THE INVENTION

A molded article having excellent rigidity and impact resistance can be provided.

MODE FOR CARRYING OUT THE INVENTION

<Molded article>

A molded article according to the present invention (hereinafter, simply referred to as a "molded article") is a molded article containing an amorphous resin, in which a peak position change rate r (%) of the molded article defined by the following Equation (1) is 1 or more.

$$\text{Peak position change rate r (\%)} = 100 \times (Q1-Q2)/Q2 \quad (1)$$

In Equation (1), Q1 is a peak position ($nm^{-1}$) of the molded article determined by a wide angle X-ray diffraction method, and Q2 is a peak position ($nm^{-1}$) of a reference molded article determined by the wide angle X-ray diffraction method.

Equation (1) will be described below in detail.

(1) Amorphous resin forming molded article

Examples of the amorphous resin forming the molded article can include a (meth)acrylic resin; a polycarbonatebased resin; a polystyrene-based resin; a polyvinyl chloride-based resin; an acrylonitrile-butadiene-styrene-based resin; an acrylonitrile-styrene-based resin, a polysulfone-based resin, a cellulose acetate-based resin, a cyclic polyolefin-based resin, a polyphenylene ether-based resin, a polyethersulfone-based resin, a polyetherimidebased resin, a polyamideimide-based resin, and a polyarylate-based resin.

The molded article may contain one amorphous resin or may contain two or more amorphous resins.

The amorphous resin can be produced according to a conventional method.

In the present specification, the "(meth)acrylic resin" refers to at least one selected from the group consisting of an acrylic resin and a methacrylic resin. The same applies to other terms with "(meth)".

In the present specification, the "acrylic resin" refers to a resin having a structural unit derived from a monomer having an acryloyl group as a polymerizable functional group, and a content of the structural unit is preferably 50% by mass or more, and more preferably 80% by mass or more, with respect to a total content of 100% by mass of all structural units constituting the resin.

In the present specification, the "methacrylic resin" refers to a resin having a structural unit derived from a monomer having a methacryloyl group as a polymerizable functional group, and a content of the structural unit is preferably 50% by mass or more, and more preferably 80% by mass or more, with respect to a total content of 100% by mass of all structural units constituting the resin.

The molded article is preferably formed of only an amorphous resin, from the viewpoint of transparency of the molded article.

The amorphous resin preferably includes a (meth)acrylic resin, and more preferably includes a methacrylic resin, from the viewpoint of transparency of the molded article. A content of the (meth)acrylic resin in the molded article is preferably 50% by mass or more, more preferably 70% by mass or more, and still more preferably 90% by mass or more, from the viewpoint of transparency of the molded article. The content of the (meth)acrylic resin in the molded article may be less than 100% by mass, 95% by mass or less, or 90% by mass or less.

In a preferred embodiment, the molded article is formed of only an amorphous resin, and the amorphous resin is a (meth)acrylic resin, and is preferably a methacrylic resin, from the viewpoint of transparency of the molded article.

The methacrylic resin preferably has a structural unit derived from a methacrylic acid ester, from the viewpoint of transparency of the molded article. The methacrylic resin may have a structural unit derived from a methacrylic acid ester and a structural unit derived from another monomer copolymerizable with a methacrylic acid ester.

Examples of the methacrylic acid ester can include methyl methacrylate, ethyl methacrylate, propyl methacrylate, butyl methacrylate, 2-ethylhexyl methacrylate, lauryl methacrylate, tetrahydrofurfuryl methacrylate, isobornyl methacrylate, benzyl methacrylate, cyclohexyl methacrylate, hydroxyethyl methacrylate, hydroxypropyl methacrylate, and hydroxybutyl methacrylate. When the number of carbons is too large, Tg is lowered. Therefore, methyl methacrylate, ethyl methacrylate, or propyl methacrylate is preferred, and methyl methacrylate is more preferred.

The methacrylic acid ester is preferably methyl methacrylate or contains methyl methacrylate. These methacrylic acid esters may be used alone or in combination of two or more thereof. For example, methyl methacrylate and a methacrylic acid ester other than methyl methacrylate may be used in combination.

The another monomer copolymerizable with a methacrylic acid ester may be a monofunctional monomer having one radically polymerizable double bond in one molecule, or may be a polyfunctional monomer having two or more radically polymerizable double bonds in one molecule. In addition, these other monomers copolymerizable with a methacrylic acid ester may be used alone or in combination of two or more thereof.

Examples of the monofunctional monomer can include an acrylic acid ester such as methyl acrylate, ethyl acrylate, propyl acrylate, butyl acrylate, 2-ethylhexyl acrylate, lauryl acrylate, tetrahydrofurfuryl acrylate, isobornyl acrylate, benzyl acrylate, cyclohexyl acrylate, hydroxyethyl acrylate, hydroxypropyl acrylate, or hydroxybutyl acrylate; an unsaturated carboxylic acid such as acrylic acid or methacrylic acid; a styrene-based monomer such as styrene or α-methylstyrene; unsaturated nitrile such as acrylonitrile or methacrylonitrile; an unsaturated carboxylic acid anhydride such as maleic anhydride; maleimide such as phenylmaleimide or cyclohexylmaleimide; and a vinyl carboxylate compound such as vinyl acetate.

Examples of the polyfunctional unsaturated monomer can include allyl acrylate, ethylene glycol diacrylate, diethylene glycol diacrylate, triethylene glycol diacrylate, polyethylene glycol diacrylate, polypropylene glycol diacrylate, 1,3-butylene glycol diacrylate, 1,6-hexanediol diacrylate, neopentyl glycol diacrylate, trimethylolpropane triacrylate, tetramethylolmethane triacrylate, tetramethylolmethane tetraacrylate, allyl methacrylate, ethylene glycol dimethacrylate, diethylene glycol dimethacrylate, triethylene glycol dimethacrylate, polyethylene glycol dimethacrylate, polypropylene glycol dimethacrylate, 1,3-butylene glycol dimethacrylate, 1,6-hexanediol dimethacrylate, neopentyl glycol dimethacrylate, trimethylolpropane trimethacrylate, tetramethylolmethane trimethacrylate, tetramethylolmethane tetramethacrylate, divinylbenzene, and diallyl phthalate.

In a case where the methacrylic resin further has a structural unit derived from another monomer copolymerizable with a methacrylic acid ester, a content of the structural unit derived from a methacrylic acid ester is preferably 50% by mass or more, more preferably 70% by mass or more, still more preferably 80% by mass or more, and particularly preferably 85% by mass or more.

The content of the structural unit derived from another monomer copolymerizable with a methacrylic acid ester is preferably 50% by mass or less, more preferably 30% by mass or less, and still more preferably 15% by mass or less, and may be 10% by mass or less. Here, a total amount of the content of the structural unit derived from a methacrylic acid ester and the content of the structural unit derived from another monomer copolymerizable with a methacrylic acid ester is 100% by mass.

In a preferred embodiment, the content of the structural unit derived from a methacrylic acid ester in the methacrylic resin is 90% by mass or more, 95% by mass or more, or 100% by mass.

In addition, in another embodiment, the methacrylic resin is a copolymer having a structural unit derived from a methacrylic acid ester and a structural unit derived from a (meth)acrylic acid. The methacrylic resin is preferred, from the viewpoint of improving heat resistance of the molded article. The content of the structural unit derived from a (meth)acrylic acid in the methacrylic resin is preferably 50% by mass or less, more preferably 30% by mass or less, and still more preferably 15% by mass or less. When the content of the structural unit derived from a (meth)acrylic acid is too high, transparency and moist heat resistance of the molded article may be reduced. The content of the structural unit derived from a (meth)acrylic acid in the methacrylic resin is preferably 5% by mass or more, and more preferably 10% by mass or more, from the viewpoint of heat resistance of the molded article.

The content of the structural unit derived from a methacrylic acid ester and the content of the structural unit derived from another monomer copolymerizable with a methacrylic acid ester can be determined by, for example, analysis using $^1$H-NMR measurement or the like.

The methacrylic resin may also have a ring structural unit in a main chain, from the viewpoint of improving heat resistance of the molded article. The "main chain" is a carbon chain derived from a vinyl group, formed by polymerizing two or more monomers. The phrase "having a ring structural unit in a main chain" means that at least two of carbon atoms constituting the main chain serve as a part of the group of atoms forming a ring structure, and as a result, the ring structural unit is incorporated into the main chain.

The ring structural unit may be either a ring structural unit that can be formed by ring closure during or after polymerization of two monomers, or a ring structural unit in which a ring is incorporated into a main chain by polymerization of one monomer having a ring.

The ring structural unit is not particularly limited as long as it is a ring structural unit incorporated as a part of a main chain of a polymer, and in particular, the ring structural unit is preferably a 6-membered ring structural unit or 5-membered ring structural unit.

For example, the ring structural unit is one or more selected from the group consisting of a glutaric anhydride structural unit, a maleic anhydride structural unit, a maleimide structural unit, a glutarimide structural unit, and a lactonic acid structural unit.

A content of the ring structural unit in the methacrylic resin is, for example, 0.1 mol% or more and 30 mol% or less, and is preferably 0.1 mol% or more and 20 mol% or less, from the viewpoint of improving heat resistance of the molded article.

The content of the ring structural unit can be determined by a numerical value calculated by determining an integral value of peaks in a peak range corresponding to each of various ring structural units by a $^{13}$C-NMR method, or analysis using a $^{13}$C-NMR method and further also using an auxiliary $^1$H-NMR method and/or IR method depending on a structure of a ring to be included.

It is preferable that the amorphous resin forming the molded article according to the present invention does not have a structural unit derived from a silica particle having a polymerizable functional group.

Examples of the polymerizable functional group can include a vinyl group, an acryloyl group, a styryl group, an allyl group, a methacryloyl group, an $\alpha$-methylstyryl group, an itaconyl group, an alkenyl group, and a crotonyl group, and the polymerizable functional group is typically a methacryloyl group.

The fact that the amorphous resin forming the molded article does not have a structural unit derived from a silica particle having a polymerizable functional group is advantageous in more easily improving transparency of the molded article and an impact resistance improvement effect that can be obtained when the amorphous resin is subjected to a molding treatment such as a stretching treatment.

In addition, the fact that the amorphous resin forming the molded article does not have a structural unit derived from a silica particle having a polymerizable functional group is also advantageous from the viewpoint of reducing a weight of the molded article.

According to the present invention, even though the structural unit derived from a silica particle having a polymerizable functional group is not included in the amorphous resin, a molded article having excellent rigidity and impact resistance can be provided.

In addition, according to the present invention, even though the structural unit derived from a silica particle having a polymerizable functional group is not included in the amorphous resin, a molded article having a low coefficient of linear expansion in an in-plane direction can be provided.

A glass transition temperature Tg of the amorphous resin forming the molded article depends on a resin type of the amorphous resin. In a case where the amorphous resin is, for example, a methacrylic resin, a glass transition temperature Tg thereof is, for example, 90°C or higher and 150°C or lower, and is preferably 100°C or higher and 140°C or lower, and may be 130°C or lower, from the viewpoint of impact resistance of the molded article.

The glass transition temperature Tg of the amorphous resin is a midpoint glass transition temperature determined by differential scanning calorimetry (DSC) based on JIS K 7121.

A viscosity average molecular weight of the amorphous resin is not particularly limited, but is generally 30,000 or more and 5,000,000 or less. The viscosity average molecular weight of the amorphous resin is preferably relatively large, in terms of easily producing a molded article excellent in rigidity and impact resistance. From this viewpoint, the viscosity average molecular weight of the amorphous resin is preferably 500,000 or more, more preferably 800,000 or more, still more preferably 1,000,000 or more, and particularly preferably 1,100,000 or more.

The viscosity average molecular weight of the amorphous resin is determined according to a method described in EXAMPLES described below.

A weight average molecular weight of the amorphous resin is not particularly limited, but is generally 30,000 or more and 5,000,000 or less. The weight average molecular weight of the amorphous resin is preferably relatively large, in terms of easily producing a molded article excellent in rigidity and impact resistance. From this viewpoint, the weight average molecular weight of the amorphous resin is preferably 200,000 or more, more preferably 400,000 or more, still more preferably 500,000 or more, and particularly preferably 1,000,000 or more.

The weight average molecular weight of the amorphous resin is determined according to a method described in EXAMPLES described below.

(2) Peak position change rate r and peak position Q1 of molded article

A molded article according to the present invention (hereinafter, simply referred to as a "molded article") is a molded article containing an amorphous resin, in which a peak position change rate r (%) of the molded article defined by the following Equation (1) is 1 or more.

$$\texttt{Peak position change rate r (\%) = 100 × (Q1-Q2)/Q2}$$

$$\texttt{(1)}$$

When the peak position change rate r is 1% or more, it is advantageous in obtaining a molded article having excellent rigidity and impact resistance, and in particular, in increasing rigidity of the molded article while maintaining excellent impact resistance.

The peak position change rate r is preferably 1.1% or more, more preferably 1.5% or more, and still more preferably 2.0% or more, from the viewpoint of increasing rigidity of the molded article. The peak position change rate r is generally 10% or less and more typically 5% or less.

Equation (1) will be described.

In Equation (1), Q1 is a peak position ($nm^{-1}$) of the molded article determined by a wide angle X-ray diffraction method, and Q2 is a peak position ($nm^{-1}$) of a reference molded article determined by the wide angle X-ray diffraction method.

The reference molded article is a molded article obtained by heat-treating the molded article at (Tg + 30)°C for 1 hour, in which Tg(°C) is a glass transition temperature of the amorphous resin forming the molded article.

The peak position Q1 of the molded article is a peak derived from the amorphous resin in a scattering vector magnitude Q-intensity profile calculated from a diffraction image obtained by a transmission method and measured by the wide angle X-ray diffraction method using the molded article as a measurement sample and obtained after background correction and transmittance correction, and the peak position Q1 is a value of Q at a peak at which Q is the smallest among peaks at which Q is in a range of 5 $nm^{-1}$ to 25 $nm^{-1}$.

The peak position Q2 of the reference molded article refers to a Q value measured in the same manner as that of the peak position Q1 except for using the reference molded article as a measurement sample.

More specifically, the peak positions Q1 and Q2 are determined by the wide angle X-ray diffraction method using an X-ray diffraction apparatus according to a measurement method described in EXAMPLES described below.

In the measurement method, a diffraction image is obtained using the X-ray diffraction apparatus, and an uncorrected sector average profile (scattering vector magnitude (Q)-intensity profile) $I_s(Q)$ is obtained from the diffraction image. A corrected sector average profile I(Q) is obtained by performing background correction and transmittance correction on the uncorrected sector average profile.

It is preferable that an exposure time when obtaining the diffraction image is long so that the corrected sector average profile I(Q) has a sufficient S/N ratio. In addition, in order to more clarify the peak positions Q1 and Q2, smoothing processing such as a Gaussian filter may be performed on the obtained corrected sector average profile I(Q) in a general range. In a case where a data interval of Q is too large, data interpolation processing such as spline interpolation may be performed on data having a sufficient S/N ratio. A scattering vector magnitude Q at which I(Q) is maximum near a peak at which Q is the smallest in data having a sufficient S/N ratio and a sufficient Q data interval is Q1. The same applies to Q2.

According to studies conducted by the present inventors, it was found that when 1) the peak position change rate r and the peak position Q1 are an index associated with a change rate of a distance between main chains of the amorphous resin before and after molding in an in-plane direction and an index associated with the distance between the main chains in the in-plane direction of the molded article, respectively, and 2) each of the peak position change rate r and the peak position Q1 is a predetermined value or more, that is, the change rate of the distance between the main chains in the in-plane direction or the distance between the main chains in the in-plane direction is a predetermined value or less, rigidity of the molded article can be improved while maintaining excellent impact resistance of the molded article. The present invention has been completed by further conducting research and studies based on these findings.

The distance between the main chains in the in-plane direction refers to a distance between main chains of a polymer in an elongation direction when a molding means for the amorphous resin is, for example, stretched.

A state of the polymer in the amorphous resin before molding (the distance between the main chains) can be reproduced by heating the molded article obtained by molding at a temperature higher than a glass transition temperature thereof. That is, the peak position Q2 of the reference molded article may refer to a peak position of the amorphous resin before molding.

For example, in a case where the amorphous resin forming the molded article is a (meth)acrylic resin or preferably a methacrylic resin, the peak position Q1 of the molded article is preferably 9.55 nm$^{-1}$ or more, more preferably 9.60 nm$^{-1}$ or more, and still more preferably 9.65 nm$^{-1}$ or more, from the viewpoint of increasing rigidity of the molded article while maintaining excellent impact resistance. The peak position Q1 of the molded article is generally 10.50 nm$^{-1}$ or less, and may be 10.00 nm$^{-1}$ or less or 9.95 nm$^{-1}$ or less.

(3) Absolute value of degree of orientation in thickness direction

An absolute value of a degree of orientation in a thickness direction of the molded article is preferably 0.02 or more, more preferably 0.05 or more and 0.5 or less, still more preferably 0.1 or more and 0.4 or less, and further still more preferably 0.2 or more and 0.35 or less, and particularly preferably 0.25 or more and 0.35 or less. When the degree of orientation in the thickness direction of the molded article is within the above range, excellent impact resistance can be applied to the molded article.

As the absolute value of the degree of orientation in the thickness direction of the molded article becomes larger, and the molecular chains of the amorphous resin are arranged in a direction more perpendicular to the thickness direction. Therefore, it is possible to improve impact resistance of the molded article.

For example, an absolute value of a degree of orientation in a thickness direction of 0.02 or more can be applied to the molded article by a stretching treatment.

The degree of orientation in the thickness direction of the molded article is determined according to a method described in EXAMPLES described below.

The degree of orientation in the thickness direction of the molded article can be adjusted by changing a stretching ratio, a stretching temperature, a stretching rate when stretching the amorphous resin, a cooling rate after stretching, a composition of the amorphous resin, and the like.

For example, as the stretching rate becomes larger, the absolute value of the degree of orientation in the thickness direction tends to be large. As the stretching temperature becomes lower, the absolute value of the degree of orientation in the thickness direction tends to be large. In addition, in a case where a molded article is produced by a press stretching method, as the stretching ratio in the thickness direction becomes larger, the absolute value of the degree of orientation in the thickness direction tends to be large, and in a cooling step after stretching, as the cooling rate becomes faster, the absolute value of the degree of orientation in the thickness direction tends to be large.

The molded article according to the present invention may have axial orientation, preferably a uniaxial orientation or biaxial orientation, and more preferably biaxial orientation.

(4) Other components that can be contained in molded article

The molded article according to the present invention may also contain components other than the amorphous resin, if necessary. The molded article may also contain, for example, additives such as a release agent, a thermal stabilizer, an antioxidant, an ultraviolet absorber, a coloring agent such as a dye or a pigment, an inorganic filler, a polymerization inhibitor, a flame retardant, and a reinforcing agent.

The release agent is not particularly limited, and examples thereof can include a higher fatty acid ester, a higher aliphatic alcohol, a higher fatty acid, a higher fatty acid amide, and a higher fatty acid metal salt.

These release agents may be used alone or in combination of two or more thereof.

Examples of the higher fatty acid ester can include a saturated fatty acid alkyl ester such as methyl laurate, ethyl laurate, propyl laurate, butyl laurate, octyl laurate, methyl palmitate, ethyl palmitate, propyl palmitate, butyl palmitate, octyl palmitate, methyl stearate, ethyl stearate, propyl stearate, butyl stearate, octyl stearate, stearyl stearate, myristyl myristate, methyl behenate, ethyl behenate, propyl behenate, butyl behenate, or octyl behenate; an unsaturated fatty acid alkyl ester such as methyl oleate, ethyl oleate, propyl oleate, butyl oleate, octyl oleate, methyl linoleate, ethyl linoleate, propyl linoleate, butyl linoleate, or octyl linoleate; a saturated fatty acid glyceride such as lauric acid monoglyceride, lauric acid diglyceride, lauric acid triglyceride, palmitic acid monoglyceride, palmitic acid diglyceride, palmitic acid triglyceride, stearic acid monoglyceride, stearic acid diglyceride, stearic acid triglyceride, behenic acid monoglyceride, behenic acid diglyceride, or behenic acid triglyceride; and an unsaturated fatty acid glyceride such as oleic acid monoglyceride, oleic acid diglyceride, oleic acid triglyceride, linoleic acid monoglyceride, linoleic acid diglyceride, or linoleic acid triglyceride.

Among them, methyl stearate, ethyl stearate, butyl stearate, octyl stearate, stearic acid monoglyceride, stearic acid diglyceride, or stearic acid triglyceride is preferred.

Examples of the higher aliphatic alcohol can include a saturated aliphatic alcohol such as lauryl alcohol, palmityl alcohol, stearyl alcohol, isostearyl alcohol, behenyl alcohol, myristyl alcohol, or cetyl alcohol; and an unsaturated aliphatic alcohol such as oleyl alcohol or linoleyl alcohol.

Among them, stearyl alcohol is preferred.

Examples of the higher fatty acid can include a saturated fatty acid such as caproic acid, caprylic acid, capric acid, lauric acid, myristic acid, palmitic acid, stearic acid, arachidic acid, behenic acid, lignoceric acid, or 12-hydroxyoctadecanoic acid; and an unsaturated fatty acid such as palmitoleic acid, oleic acid, linoleic acid, linolenic acid, cetoleic acid, erucic acid, or ricinoleic acid.

Examples of the higher fatty acid amide can include a saturated fatty acid amide such as lauramide, palmitamide, stearamide, or behenamide; an unsaturated fatty acid amide such as oleamide, linoleamide, or erucamide; and an amide such as ethylene bislauramide, ethylene bispalmitamide, ethylene bisstearamide, or N-oleyl stearamide.

Among them, stearamide or ethylene bisstearamide is preferred.

Examples of the higher fatty acid metal salt can include a sodium salt, potassium salt, calcium salt, and barium salt of the above-described higher fatty acid.

A content of the release agent is preferably 0.01 parts by mass or more and 1.0 parts by mass or less, and more preferably 0.01 parts by mass or more and 0.5 parts by mass or less, with respect to 100 parts by mass of the amorphous resin.

The thermal stabilizer is not particularly limited, and examples thereof can include a hindered phenol-based thermal stabilizer, a phosphorus-based thermal stabilizer, and an organic disulfide compound.

Among them, an organic disulfide compound is preferred.

These thermal stabilizers may be used alone or in combination of two or more thereof.

Examples of the hindered phenol-based thermal stabilizer can include 1,3,5-tris(3,5-di-tert-butyl-4-hydroxybenzyl)-1,3,5-triazin-2,4,6[1H,3H,5H]-trione, octadecyl 3-(3,5-di-tert-butyl-4-hydroxyphenyl)propionate, pentaerythritol tetrakis[3-(3,5-di-tert-butyl-4-hydroxyphenyl)propionate], 3,9-bis{2-[3-(3-tert-butyl-4-hydroxy-5-methylphenyl)propionyloxy]-1,1-dimethylethyll-2,4,8,10-tetraoxaspiro[5.5]undecane, and 1,3,5-tris(3,5-di-tert-butyl-4-hydroxyphenylmethyl)-2,4,6-trimethylbenzene.

Among them, octadecyl 3-(3,5-di-tert-butyl-4-hydroxyphenyl)propionate or pentaerythritol tetrakis[3-(3,5-di-tert-butyl-4-hydroxyphenyl)propionate] is preferred.

Examples of the phosphorus-based thermal stabilizer can include tris(2,4-di-t-butylphenyl)phosphite, 2-[[2,4,8,10-tetrakis(1,1-dimethylethyl)dibenzo[d,f][1,3,2]dioxaphosphepin-6-yl]oxy]-N,N-bis[2-[[2,4,8,10-tetrakis(1,1-dimethylethyl)dibenzo[d,f][1,3,2]dioxaphosphepin-6-yl]oxy]-ethyl]ethanamine, diphenyl tridecyl phosphite, triphenyl phosphite, 2,2-methylenebis(4,6-di-tert-butylphenyl)octylphosphite, and bis(2,6-di-tert-butyl-4-methylphenyl)pentaerythritol diphosphite.

Among them, 2,2-methylenebis(4,6-di-tert-butylphenyl)octylphosphite is preferred.

Examples of the organic disulfide compound can include dimethyl disulfide, diethyl disulfide, di-n-propyl disulfide, di-n-butyl disulfide, di-sec-butyl disulfide, di-tert-butyl disulfide, di-tert-amyl disulfide, dicyclohexyl disulfide, di-tert-octyl disulfide, di-n-dodecyl disulfide, and di-tert-dodecyl disulfide.

Among them, di-tert-alkyl disulfide is preferred, and di-tert-dodecyl disulfide is more preferred.

A content of the thermal stabilizer is preferably 1 mass ppm or more and 2,000 mass ppm or less with respect to 100 parts by mass of the amorphous resin.

Examples of the ultraviolet absorber can include a benzophenone-based ultraviolet absorber, a cyanoacrylate-based ultraviolet absorber, a benzotriazole-based ultraviolet absorber, a malonic acid ester-based ultraviolet absorber, and an oxalanilide-based ultraviolet absorber.

These ultraviolet absorbers may be used alone or in combination of two or more thereof.

Among them, as the ultraviolet absorber, a benzotriazole-based ultraviolet absorber, a malonic acid ester-based ultraviolet absorber, or an oxalanilide-based ultraviolet absorber is preferred.

Examples of the benzophenone-based ultraviolet absorber can include 2,4-dihydroxybenzophenone, 2-hydroxy-4-methoxybenzophenone, 2-hydroxy-4-methoxybenzophenone-5-sulfonic acid, 2-hydroxy-4-octyloxybenzophenone, 4-dodecyloxy-2-hydroxybenzophenone, 4-benzyloxy-2-hydroxybenzophenone, and 2,2'-dihydroxy-4,4'-dimethoxybenzophenone.

Examples of the cyanoacrylate-based ultraviolet absorber can include ethyl 2-cyano-3,3-diphenylacrylate, and 2-ethylhexyl 2-cyano-3,3-diphenylacrylate.

Examples of the benzotriazole-based ultraviolet absorber can include 2-(2-hydroxy-5-methylphenyl)-2H-benzotriazole, 5-chloro-2-(3,5-di-t-butyl-2-hydroxyphenyl)-2H-benzotriazole, 2-(3-t-butyl-2-hydroxy-5-methylphenyl)-5-chloro-2H-benzotriazole, 2-(3,5-di-t-pentyl-2-hydroxyphenyl)-2H-benzotriazole, 2-(3,5-di-t-butyl-2-hydroxyphenyl)-2H-benzotriazole, 2-(2H-benzotriazole-2-yl)-4-methyl-6-(3,4,5,6-tetrahydrophthalimidylmethyl)phenol, and 2-(2-hydroxy-5-t-octylphenyl)-2H-benzotriazole.

As the malonic acid ester-based ultraviolet absorber, 2-(1-arylalkylidene)malonic acid ester is generally used, and an example of the malonic acid ester-based ultraviolet absorber can include dimethyl 2-(p-methoxybenzylidene)malonate.

As the oxalanilide-based ultraviolet absorber, 2-alkoxy-2'-alkyloxalanilide is generally used, and an example of the oxalanilide-based ultraviolet absorber can include 2-ethoxy-2'-ethyloxalanilide.

A content of the ultraviolet absorber is preferably 5 mass ppm or more and 1,000 mass ppm or less with respect to 100 parts by mass of the amorphous resin.

Examples of the inorganic filler can include a silica particle, a titanium oxide particle, an aluminum oxide particle, a zirconium oxide particle, a niobium oxide particle, a zinc oxide particle, a tin oxide particle, a cerium oxide particle, a magnesium oxide particle, a calcium carbonate particle, a barium sulfate particle, a talc particle, a kaolin particle, and a calcium sulfate particle.

These inorganic fillers may be used alone or in combination of two or more thereof.

A particle size of the inorganic filler is preferably 100 nm or less, from the viewpoint of transparency of the molded article and moldability to the molded article.

A content of the inorganic filler is preferably 0.01 parts by mass or more and 30 parts by mass or less, and more preferably 0.01 parts by mass or more and 20 parts by mass or less, with respect to 100 parts by mass of the amorphous resin.

(5) Shape of molded article

A shape of the molded article according to the present invention is not particularly limited, and examples thereof can include a plate shape, a sheet shape, a film shape, a shape of a product itself, and a shape of a part itself used in a product.

The molded article according to the present invention may be processed to obtain a desired product or part (member).

In an embodiment, the molded article is a plate, a sheet, or a film. A width and length of the plate, sheet, or film are not particularly limited. The plate, sheet, or film is, for example, a long article or a roll thereof. A thickness of the plate, sheet, or film may be, for example, 10 $\mu$m or more and 50 mm or less, 0.1 mm or more and 10 mm or less, or 0.5 mm or more and 4 mm or less.

The molded article according to the present invention may be a plate piece, sheet piece, or film piece cut out from the plate, sheet, or film, respectively.

Various resin products or resin parts can be produced using the molded article according to the present invention, or the molded article according to the present invention may be a resin product or a resin part itself.

Examples of the resin product or resin part can include an automobile material, a display window protection plate, a transparent sound insulation plate installed on a road or the like, and a transparent tide barrier installed in a harbor for protection from tsunami and tidal wave. Since the molded article according to the present invention has excellent rigidity and impact resistance, the molded article is applied to an automobile material, a display window protection plate, a transparent sound insulation plate, and a transparent tide barrier.

The molded article according to the present invention can exhibit high rigidity, and for example, a flexural modulus determined according to a method described below in EXAMPLES may be 3,500 MPa or more, further 3,700 MPa or more, and still further 3,800 MPa or more.

In addition, the molded article according to the present invention can exhibit high impact resistance, and for example, a Charpy impact value determined according to a method described below in EXAMPLES may be 70 or more, and further 75 or more.

In addition, the molded article according to the present invention can exhibit a low in-plane coefficient of linear expansion, and for example, a coefficient of linear expansion in an in-plane direction determined according to a method described below in EXAMPLES may be 65 or less, further 60 or less, and still further 55 or less.

The display window protection plate is used for an electronic device having a window (display) for displaying character information, image information, and the like, and is used for protecting the window (display). Examples of the electronic device can include a mobile phone, a smart phone, a personal computer, a tablet computer, a digital camera, a video camera, a handheld game console, and a portable audio player.

Examples of the automobile material can include a rear lamp cover, a head lamp cover, and an automobile window such as front glass, side glass, rear glass, or a roof.

The resin product or resin part such as an automobile material or a display window protection plate can be produced by cutting the plate, sheet, or film, which is the molded article according to the present invention, into a desired shape and size, or by further processing the plate, sheet, or film (for example, adjustment of the shape or the like).

<Production method of molded article>

The molded article according to the present invention can be produced by molding a resin composition containing an amorphous resin, or preferably molding an amorphous resin.

The molding is preferably a stretching treatment.

A temperature in the stretching treatment (stretching temperature) is generally (Tg + 20)°C or lower, preferably (Tg + 10)°C or lower, more preferably Tg°C or lower, and still more preferably (Tg - 10)°C or lower, in which Tg(°C) is a glass transition temperature of the amorphous resin, in terms of easily obtaining a molded article satisfying Equation (1). The stretching temperature is preferably (Tg - 20)°C or lower or (Tg - 30)°C or lower to obtain a molded article satisfying Equation (1).

The stretching temperature is preferably (Tg - 40)°C or higher in order to enable the stretching treatment itself.

The stretching temperature refers to a mold temperature (die temperature) during the stretching treatment or a temperature inside a stretching bath.

The stretching temperature is preferably adjusted depending on the viscosity average molecular weight of the amorphous resin. For example, when the viscosity average molecular weight of the amorphous resin is less than 1,000,000, the stretching temperature is preferably Tg°C or lower, and more preferably (Tg - 10)°C or lower.

Examples of a method of the stretching treatment can include a uniaxial stretching method such as free-width uniaxial stretching or constant-width uniaxial stretching, a biaxial stretching method such as sequential biaxial stretching or simultaneous biaxial stretching, and a press stretching method of performing stretching while applying a pressure (rolling method). Among them, a biaxial stretching method or a press stretching method is preferred, and a press stretching method is more preferred, in terms of capable of uniformly stretching the amorphous resin.

For example, in a case where a molded article is produced by a press stretching method, a biaxially oriented molded article is generally obtained.

In order to obtain a molded article satisfying Equation (1), the stretching ratio is preferably large.

The stretching ratio in the thickness direction (thickness before stretching/thickness after stretching) is preferably 1.1 times or more and 10.0 times or less, more preferably 1.2 times or more and 7 times or less, still more preferably 1.5 times or more and 5.0 times or less, and particularly preferably 1.8 times or more and 4.0 times or less.

As the stretching ratio in the thickness direction becomes larger, a molded article satisfying Equation (1) tends to be easily obtained, or a molded article excellent in rigidity tends to be easily obtained. In addition, as the stretching ratio in the thickness direction becomes larger, the absolute value of the degree of orientation in the thickness direction tends to be large, or a molded article excellent in impact resistance tends to be easily obtained.

When the stretching ratio in the thickness direction is too large, an appearance of a molded article to be obtained may be deteriorated.

The thickness direction is a direction indicating a thickness of an object to be stretched. In general, the thickness direction is a direction perpendicular to a plane having the largest area of the object. For example, in the press stretching method, a direction in which a pressure is applied is a thickness direction, and in the uniaxial stretching method or biaxial stretching direction, a direction perpendicular to a pulling direction is a thickness direction.

The stretching rate in the stretching treatment is not particularly limited, and for example, in the case of the press stretching method, the stretching rate is preferably a rate at which a thickness of the resin composition containing the amorphous resin or a thickness of the amorphous resin is changed at a rate of 0.01 mm/sec or more and 100 mm/sec or less. The stretching rate may be changed or may be constant. When the stretching rate is too slow, the orientation during stretching is relaxed, such that the absolute value of the degree of orientation in the thickness direction may not be sufficiently large, and a molded article excellent in impact resistance may not be easily obtained. When the stretching rate is too fast, cracks may occur in the molded article.

The pressure during the stretching is not particularly limited, but the pressure varies depending on an apparatus to be used or an area of a resin composition containing an amorphous resin to be stretched or an area of an amorphous resin. However, for example, in the case of the press stretching method, the pressure applied to a resin composition containing an amorphous resin of an 80 mm × 80 mm square or an amorphous resin is preferably 0.1 MPa or more and 1,000 MPa or less. When the pressure during the stretching is too small, the object may not be stretched to a desired thickness.

In one embodiment, a production method of the molded article includes:

a step of preparing a laminate including a first layer formed of a first thermoplastic resin, a second layer formed of a second thermoplastic resin which is an amorphous resin, and a third layer formed of a third thermoplastic resin in this order;
a step of performing a press stretching treatment on the laminate at a temperature of (Tg + 20)°C or lower [Tg is a glass transition temperature of the second thermoplastic resin]; and
a step of peeling and removing the first layer and the third layer.

The temperature in the press stretching treatment (press stretching temperature) is preferably (Tg + 10)°C or lower, more preferably Tg°C or lower, and still more preferably (Tg - 10)°C or lower, in terms of easily obtaining a molded article satisfying Equation (1). The press stretching temperature is preferably (Tg - 20)°C or lower or (Tg - 30)°C or lower in order to obtain a molded article satisfying Equation (1).

The second layer is preferably formed of only an amorphous resin, from the viewpoint of transparency of a molded article to be obtained.

The second thermoplastic resin, which is an amorphous resin, forming the second resin layer preferably includes a (meth)acrylic resin, and more preferably includes a methacrylic resin, from the viewpoint of transparency of the molded article. A content of the (meth)acrylic resin in the second layer is preferably 50% by mass or more, more preferably 70% by mass or more, and still more preferably 90% by mass or more, from the viewpoint of transparency of the molded article. The content of the (meth)acrylic resin in the second layer may be less than 100% by mass, 95% by mass or less, or 90% by mass or less.

In a preferred embodiment, the second layer is formed of only an amorphous resin, and the amorphous resin is a (meth)acrylic resin, and preferably a methacrylic resin, from the viewpoint of transparency of the molded article.

The methacrylic resin preferably has a structural unit derived from a methacrylic acid ester, from the viewpoint of transparency of the molded article. The methacrylic resin may have a structural unit derived from a methacrylic acid ester and a structural unit derived from another monomer copolymerizable with a methacrylic acid ester. Examples of the methacrylic acid ester and the another monomer copolymerizable with a methacrylic acid ester are the same as described above.

In one embodiment, the content of the structural unit derived from a methacrylic acid ester in the methacrylic resin is 90% by mass or more, 95% by mass or more, or 100% by mass.

In addition, in another embodiment, the methacrylic resin is a copolymer having a structural unit derived from a methacrylic acid ester and a structural unit derived from a (meth)acrylic acid. The methacrylic resin is preferred, from the viewpoint of improving heat resistance of the molded article. The content of the structural unit derived from a (meth)acrylic acid in the methacrylic resin is preferably 50% by mass or less, more preferably 30% by mass or less, and still more preferably 15% by mass or less. When the content of the structural unit derived from a (meth)acrylic acid is too high, transparency and moist heat resistance of the molded article may be reduced. The content of the structural unit derived from a (meth)acrylic acid in the methacrylic resin is preferably 5% by mass or more, and more preferably 10% by mass or more, from the viewpoint of heat resistance of the molded article.

In addition, as described above, the methacrylic resin may have a ring structural unit in a main chain, from the viewpoint of improving heat resistance of the molded article.

The first thermoplastic resin forming the first layer and the third thermoplastic resin forming the third layer are preferably non-adhesive to the second thermoplastic resin forming the second layer so that the step of peeling and removing the first layer and the third layer can be easily performed.

In a case where the second thermoplastic resin contains a (meth)acrylic resin or is formed of a (meth)acrylic resin, examples of the first thermoplastic resin and the third thermoplastic resin can include an olefin-based resin. Examples of the olefin-based resin can include an ethylene-based resin and a propylene-based resin.

Examples of the ethylene-based resin can include an ethylene homopolymer and a copolymer in which a content of a monomer unit derived from ethylene is more than 50% by mass. Specific examples of the ethylene-based resin can include low-density polyethylene, high-density polyethylene, an ethylene-1-butene copolymer, an ethylene-4-methyl-1-pentene copolymer, an ethylene-1-hexene copolymer, an ethylene-1-octene copolymer, an ethylene-1-decene copolymer, an ethylene-1-butene-4-methyl-1-pentene copolymer, an ethylene-1-butene-1-hexene copolymer, an ethylene-1-butene-1-octene copolymer, an ethylene-methyl methacrylate copolymer, an ethylene-vinyl acetate copolymer, and a saponified ethylene-vinyl acetate copolymer.

The propylene-based resin is a propylene homopolymer or a copolymer in which a content of a monomer unit derived from propylene is 50% by mass or more. Examples of the copolymer in which a content of a monomer unit derived from propylene is 50% by mass or more can include a propylene-ethylene random copolymer, a propylene-$\alpha$-olefin random copolymer, a propylene-ethylene-$\alpha$-olefin random copolymer, and a propylene-based block copolymer formed of a propylene homopolymer component and a copolymer component of one or more comonomers selected from the group consisting of propylene, ethylene, and/or an $\alpha$-olefin having 4 or more carbon atoms. Examples of the propylene-$\alpha$-olefin random copolymer can include a propylene-1-butene random copolymer and a propylene-1-hexene random copolymer. Examples of the propylene-ethylene-$\alpha$-olefin random copolymer can include a propylene-ethylene-1-butene random copolymer and a propylene-ethylene-1-hexene random copolymer. As the propylene-based resin, a propylene-based block copolymer or a propylene-ethylene random copolymer is preferred, from the viewpoint of uniform press stretchability.

The olefin-based resin used for each of the first thermoplastic resin and the third thermoplastic resin may be a mixture of two or more ethylene-based resins, a mixture of two or more propylene-based resins, and a mixture of one or more ethylene-based resins and one or more propylene-based reins.

A melting point of the olefin-based resin is preferably in a range of 100°C or higher and 170°C or lower, from the viewpoint of improving uniformity of the stretching treatment.

A melt flow rate (temperature of 230°C and load of 2.16 kgf) of the olefin-based resin is preferably 0.05 g/10 min or more and 10 g/10 min or less, more preferably 0.1 g/10 min or more and 6 g/10 min or less, from the viewpoint of improving uniformity of the stretching treatment.

The production method of the molded article can further include a step of heating the resin composition containing the amorphous resin or the amorphous resin at a temperature (Tg - 60°C) or higher, the temperature being lower than a glass transition temperature Tg of the amorphous resin by 60°C.

The production method of the molded article can further include a step of molding the resin composition containing the amorphous resin or the amorphous resin before the stretching step or the heating step to produce an unstretched molded article. In this case, the unstretched molded article is subjected to a stretching step or a heating step and a stretching step.

Examples of the molding method for producing the unstretched molded article can include an extrusion molding method, an injection molding method, and a hot plate press molding method.

A shape of the unstretched molded article is not particularly limited, but is preferably a plate shape, a sheet shape, or a film shape. In a case where the shape of the unstretched molded article is a plate shape, a sheet shape, or a film shape, in a surface shape of the unstretched molded article, a ratio of the longest distance to the shortest distance from a position of the center of the molded article to each vertex or each side (longest distance/shortest distance) is preferably in a range of 1.0 to 2.1, from the viewpoint of improving uniformity of the stretching treatment. In a case where the surface shape is, for example, a square shape, the longest distance/shortest distance is 1.4.

The production method of the molded article can further include a step of mixing and kneading another blend component such as the above-described additive and the amorphous resin, before the heating step, while performing the heating step, or before the step of producing the unstretched molded article.

The production method of the molded article can further include a holding step of holding the molded article obtained by stretching at a temperature lower than the stretching temperature and higher than the glass transition temperature of the amorphous resin.

It is preferable that a pressure is applied to the molded article held in the holding step. It is more preferable that the pressure is relatively low. The pressure in the holding step is preferably 0.1 MPa or more and equal to or less than a pressure during stretching. When the pressure in the holding step is less than 0.1 MPa, the molded article is likely to be shrunk. When the pressure in the holding step exceeds the pressure during stretching, the molded article is likely to be deformed or broken.

A time of the holding step may be, for example, 10 minutes or longer and several hours or shorter.

Specifically, the holding step can be a step of holding the molded article obtained by stretching at the above temperature in a compression press or on a cooling press.

The holding step may be performed after a cooling step described below.

The production method of the molded article can further include a cooling step of cooling the molded article obtained by stretching to a temperature lower than (Tg - 60°C), the temperature being lower than the glass transition temperature Tg of the amorphous resin by 60°C. Orientation can be fixed to the molded article by stretching through the cooling step.

An example of the cooling step can include a method of performing cooling in a compression press or on a cooling press.

In the cooling step, as the cooling rate becomes larger, orientation easily remains in the molded article by stretching, the absolute value of the degree of orientation in the thickness direction tends to be large, and a molded article excellent in impact resistance tends to be easily obtained. The temperature of the molded article after cooling is not particularly limited as long as it is a temperature at which the molded article is not shrunk, but as the temperature becomes lower, orientation easily remains in the molded article by stretching, the absolute value of the degree of orientation in the thickness direction tends to be large, and a molded article excellent in impact resistance tends to be easily obtained.

A cooling method is not particularly limited, but when the cooling is performed while maintaining a load (pressure, tension, or the like) during stretching, an appearance of the molded article is excellent, and a molded article having a desired thickness can be obtained with high precision, which is preferable.

EXAMPLES

Hereinafter, the present invention will be described in detail with reference to Examples, but the present invention is not limited to Examples. These Examples can be carried out with appropriate modifications in a range suitable for the gist of the present invention, and all Examples are included in the technical scope of the present invention.

The measurement method and evaluation method adopted in the present specification are as follows.

1. Viscosity average molecular weight of amorphous resin forming molded article

A viscosity average molecular weight was determined according to following equation.

$$\mathtt{lnM = \{ln[\eta] - ln(4.8{\times}10^{-5})\}/0.8}$$

In the equation, M represents a viscosity average molecular weight, and [η] represents a limiting viscosity measured with an Ubbelohde viscometer based on JIS Z8803.

2. Weight average molecular weight of amorphous resin forming molded article

A weight average molecular weight was measured under following conditions using gel permeation chromatography (GPC). For a pretreatment, a solution obtained by being dissolved in an eluent and then filtered by a 0.45 μm membrane filter was used as a measurement solution.

 Column: TSKgel SuperHM-H × 2
 (6.0 mm I.D. × 150 mm × 2)
 Eluent: THF
 Flow rate: 0.3 mL/min
 Detector: RI detector
 Column temperature: 40°C
 Injection amount: 20 μL
 Molecular weight standard: standard polymethylmethacrylate (PMMA)

3. Glass transition temperature Tg of amorphous resin forming molded article

As for a glass transition temperature of the amorphous resin forming the molded article, a midpoint glass transition temperature was measured using a differential scanning calorimeter (DSC7020, manufactured by SEIKO INSTRUMENTS INC.) based on JIS K 7121, and the midpoint glass transition temperature was used as a glass transition temperature Tg.

4. Peak position Q1, peak position Q2, and peak position change rate r

(1) Peak position Q1

A peak position Q1 was determined by wide angle X-ray diffraction (WAXD). A molded article was cut into in a cross section parallel with a thickness direction and was used as a measurement sample. A dimension in a direction perpendicular to a cross section of the obtained measurement sample was 1 mm. In addition, as dimensions of the cross section, a thickness direction was 3 mm, and a direction perpendicular to the thickness direction was 10 mm.

The obtained measurement sample was placed so that the thickness direction of the measurement sample was a vertical direction, one cross section of the measurement sample was irradiated with X-rays from a direction perpendicular to the cross section, and capturing of a diffraction image by a transmission method and measurement of transmitted light intensity As of a direct beam were performed, using an X-ray diffraction apparatus.

An uncorrected sector average profile (scattering vector magnitude (Q)-intensity profile) Is(Q) in a horizontal direction was calculated from the obtained diffraction image. The uncorrected sector average profile in the horizontal direction was obtained by determining an average intensity in a range of an azimuth $\varphi$ of -20 degrees to +20 degrees and 160 degrees to 200 degrees. However, as for the azimuth $\varphi$, 0 degrees and 90 degrees when viewed from an X-ray source are defined as a horizontal right direction and a vertical upward direction, respectively. The uncorrected sector average profile refers to a sector average profile before performing background correction. The measurement was performed under the same condition except for removing the measurement sample from an optical axis of the X-ray to calculate a background sector average profile $I_B(Q)$ and to measure of a transmitted light intensity of a direct beam $A_B$. After performing transmittance correction based on the following Equation (2), the background was removed from the uncorrected sector average profile to obtain a sector average profile I(Q) obtained after background correction.

$$I(Q) = I_S(Q)/A_S - I_B(Q)/A_B \quad (2)$$

Among peaks of I(Q) derived from the amorphous resin at which Q is in a range of 5 $nm^{-1}$ to 25 $nm^{-1}$, a value of Q at a peak at which Q is the smallest was Q1.

In all of the following Examples and Comparative Examples, a S/N ratio of the obtained corrected sector average profile I(Q) was about 100. In all of the following Examples and Comparative Examples, smoothing processing was performed on the obtained corrected sector average profile I(Q) by implementing a Gaussian filter having a kernel size 3 three times (used software: Igor Pro 6.2). In addition, third-order spline interpolation was performed on I(Q) obtained after the smoothing processing, and a data interval was set to 0.003 $nm^{-1}$ (used software: Igor Pro 6.2).

In Example 6 and Comparative Example 3, three measurement samples were cut out from the molded article, and peak positions Q1 of these measurement samples were determined according to the above (n = 3). Values of the obtained three peak positions Q1 were substantially the same as each other, and it was confirmed that a sufficiently reliable measurement value was obtained in measurement of n = 1. The same was applied to the following peak position Q2 and peak position change rate r.

(2) Peak position Q2

The molded article was subjected to a heat treatment at (Tg + 30)°C for 1 hour to obtain a reference molded article. Tg is a glass transition temperature (°C) of the amorphous resin forming the molded article. A peak position of the reference molded article was determined according to the same procedure as that of (1) above and used as a peak position Q2.

(3) Peak position change rate r

A peak position change rate r was determined according to the following Equation (1):

$$\text{Peak position change rate r (\%)} = 100 \times (Q1-Q2)/Q2$$

$$(1).$$

5. Degree of orientation in thickness direction

Retardation of the obtained molded article was measured by a Senarmont method. A red (wavelength of 632.8 nm) laser beam was used as a light source. Three main refractive indexes Nx, Ny, and Nz were calculated from a measurement value of the retardation according to a method described in "Introduction to high-order structural analysis of plastic molded articles", pp. 72 to 74, written by Takeshi Kikutani and Hiroshi Ito, edited by the Japan Society of Polymer Processing, Nikkan Kogyo Shimbun (2006). Nx, Ny, and Nz were calculated by rotating the molded article about one principal refractive index axis and measuring retardation from two directions, and a degree of orientation fz in a thickness direction was calculated using the following Equation (3). In Equation (3), $\Delta n$ is an intrinsic birefringence of the molded article. The intrinsic birefringence $\Delta n$ of the molded article (intrinsic birefringence of polymethylmethacrylate) was set to -0.004 (referring to technical data "42. Birefringence and orientation function", from Oji Scientific Instruments, August 2012, http://www.ojikeisoku.co.jp/products/kobra/reference.html). An absolute value of the degree of orientation fz in the thickness direction is shown in Table 1.

$$fz = [(Nz - Nx) + (Nz - Ny)]/(2\Delta n) \quad (3)$$

6. Flexural modulus

A test piece having a width of 10 mm, a length of 80 mm, and a thickness of 3 mm was produced from the obtained molded article. A flexural modulus of the obtained test piece was measured based on JIS K 7171. The larger the value of the flexural modulus, the better the rigidity.

7. Charpy impact value

A test piece having a width of 10 mm, a length of 80 mm, and a thickness of 3 mm was produced from the obtained molded article. A Charpy impact value when applying flatwise impact to the obtained test piece was measured based on JIS K 7111. The larger the Charpy impact value, the better the impact resistance.

8. Coefficient of linear expansion in in-plane direction

A test piece having a width of 5 mm, a length of 10 mm, and a thickness of 3 mm was produced from the obtained molded article. A coefficient of linear expansion in an in-plane direction of the obtained test piece was measured under the following conditions. The smaller the coefficient of linear expansion, the better the heat shrinkability.

Measurement equipment: TMA6100 (manufactured by SEIKO INSTRUMENTS INC.)
Measurement mode: compression
Measurement temperature: 25°C to 80°C
Measurement load: 50 mN
Temperature rising rate: 5 °C/min
Measurement atmosphere: nitrogen
Cross-sectional area of test piece: A width and thickness were measured at one point of each of an upper portion, middle portion, and lower portion of the test piece with a digital indicator. A cross-sectional area was determined from an average width and an average thickness obtained by averaging the obtained three widths and three thicknesses, respectively.

As for the coefficient of linear expansion obtained by the above measurement method, a decrease in coefficient of linear expansion due to shrinkage is not considered.

9. Measurement of shrinkage temperature

A test piece having a width of 5 mm, a length of 10 mm, and a thickness of 3 mm was produced from the obtained molded article. A shrinkage temperature in an in-plane direction of the obtained test piece was measured under the following conditions. The higher the shrinkage temperature, the better the heat resistance. A temperature indicating the maximum value on the obtained TMA curve was defined as a shrinkage temperature.

Measurement equipment: TMA6100 (manufactured by SEIKO INSTRUMENTS INC.)
Measurement mode: compression
Measurement temperature: 25°C to 100°C
Measurement load: 50 mN
Temperature rising rate: 5 °C/min
Measurement atmosphere: nitrogen
Cross-sectional area of test piece: A width and thickness were measured at one point of each of an upper portion, middle portion, and lower portion of the test piece with a digital indicator. A cross-sectional area was determined from an average width and an average thickness obtained by averaging the obtained three widths and three thicknesses, respectively.

<Example 1>

(1) Production of methacrylic resin sheet

99.9 parts by mass of methyl methacrylate (MMA) and 0.1 parts by mass of 2,2'-azobisisobutyronitrile (AIBN) as a polymerization initiator were mixed with each other to obtain a mixture. Next, the obtained mixture was poured into a cell composed of two glass plates and a soft polyvinyl chloride gasket and having a gap interval of 6 mm, and the mixture was polymerized by performing heating in a polymerization tank using air as a heat medium at 60°C for 7 hours and then at 120°C for 40 minutes, thereby obtaining a methacrylic resin sheet (Tg: 114°C, viscosity average molecular weight: 1,200,000, weight average molecular weight: 2,300,000).

(2) Production of molded article by stretching

A 100 $\mu$m-thick polypropylene sheet (propylene-based block copolymer, melt flow rate (temperature of 230°C and load of 2.16 kgf) of 0.8 g/10 min, hereinafter, referred to as "polypropylene sheet A") was placed, and a sample obtained by cutting out the methacrylic resin sheet obtained in (1) above into a size of 60 mm $\times$ 60 mm was installed on the polypropylene sheet. Further, a 100 $\mu$m-thick polypropylene sheet A was placed on the sample, and heating was performed in a constant temperature bath at 80°C for 40 minutes. Next, press stretching was performed to a thickness of 3 mm using a press (single-acting compression molding machine NSF-70 type, clamping pressure of 70 tons, manufactured by Shinto Metal Industries, Ltd.) in which a die was heated to 80°C. In addition, immediately after stretching, water was passed through the die of the press to cool the die, and cooling was performed to 50°C for 6 minutes while applying a press load. The sample cooled to 50°C was removed, and two polypropylene sheets A were peeled off and removed to obtain a stretched methacrylic resin sheet, thereby obtaining a biaxially oriented molded article.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1.

A viscosity average molecular weight and a glass transition temperature (Tg) of the methacrylic resin forming the methacrylic resin sheet and the stretching conditions for the methacrylic resin sheet are also shown in Table 1 (the same applies to the following Examples and Comparative Examples).

<Example 2>

A molded article (subjected to press stretching to a thickness of 3 mm) was obtained in the same manner as that of Example 1, except that the obtained mixture was poured into a cell composed of two glass plates and a soft polyvinyl chloride gasket and having a gap interval of 8 mm, and the mixture was polymerized by performing heating in a polymerization tank using air as a heat medium at 50°C for 15 hours and then at 120°C for 60 minutes, thereby obtaining a methacrylic resin sheet (Tg: 114°C, viscosity average molecular weight: 1,200,000, weight average molecular weight: 2,300,000).

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1.

<Example 3>

A molded article (subjected to press stretching to a thickness of 3 mm) was obtained in the same manner as that of Example 1, except that the obtained mixture was poured into a cell composed of two glass plates and a soft polyvinyl chloride gasket and having a gap interval of 10 mm, and the mixture was polymerized by performing heating in a polymerization tank using air as a heat medium at 50°C for 18 hours and then at 120°C for 60 minutes, thereby obtaining a methacrylic resin sheet (Tg: 114°C, viscosity average molecular weight: 1,200,000, weight average molecular weight: 2,300,000).

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1.

<Example 4>

A molded article was obtained in the same manner as that of Example 2, except that heating was performed in a constant temperature bath at 100°C for 40 minutes and press stretching was performed to a thickness of 3 mm by a press in which a die was heated to 100°C.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1.

<Example 5>

A molded article was obtained in the same manner as that of Example 3, except that heating was performed in a constant temperature bath at 100°C for 40 minutes and press stretching was performed to a thickness of 3 mm by a press in which a die was heated to 100°C.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1.

<Example 6>

A molded article was obtained in the same manner as that of Example 5, except that a 60 mm square methacrylic resin sheet (Tg: 110°C, viscosity average molecular weight: 60,000, weight average molecular weight: 130,000) having a thickness of 10 mm was produced by using a pellet-shaped methacrylic resin ("SUMIPEX MH", manufactured by Sumitomo Chemical Co., Ltd.) at a molding temperature of 210°C using a heat and compression molding machine.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1.

<Example 7>

(1) Production of methacrylic resin sheet

99.9 parts by mass of methyl methacrylate (MMA) and 0.1 parts by mass of 2,2'-azobisisobutyronitrile (AIBN) as a polymerization initiator were mixed with each other to obtain a mixture. Next, the obtained mixture was poured into a cell composed of two glass plates and a soft polyvinyl chloride gasket and having a gap interval of 10 mm, and the mixture was polymerized by performing heating in a polymerization tank using hot water as a heat medium at 60°C for 5 hours and then using air as a heat medium at 120°C for 5 hours, thereby obtaining a methacrylic resin sheet (Tg: 119°C, viscosity average molecular weight: 3,700,000, weight average molecular weight: 4,000,000).

(2) Production of molded article by stretching

A 100 $\mu$m-thick polypropylene sheet A was placed, and a sample obtained by cutting out the methacrylic resin sheet obtained in (1) above into an octagonal shape (a shape obtained by cutting out from four corners of a 140 mm $\times$ 140 mm square into an isosceles triangle shape with one side of 15 mm) was installed on the polypropylene sheet A. Further, a 100 $\mu$m-thick polypropylene sheet A was placed on the sample, and heating was performed in a constant temperature bath at 120°C for 40 minutes. Next, press stretching was performed to a thickness of 3 mm using a press (TRYOUT PRESS CFR-1812-300FG, clamping pressure of 300 tons, manufactured by SANKI SEIKO CO., LTD.) in which a die was heated to 120°C. In addition, immediately after stretching, water was passed through the die of the press to cool the die, and cooling was performed to 50°C for 6 minutes while applying a press load. The sample cooled to 50°C was removed, and two polypropylene sheets A were peeled off and removed to obtain a stretched methacrylic resin sheet, thereby obtaining a biaxially oriented molded article.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 142 MPa.

<Example 8>

(1) Production of methacrylic resin sheet

99.9 parts by mass of methyl methacrylate (MMA) and 0.1 parts by mass of 2,2'-azobisisobutyronitrile (AIBN) as a polymerization initiator were mixed with each other to obtain a mixture. Next, the obtained mixture was poured into a cell composed of two glass plates and a soft polyvinyl chloride gasket and having a gap interval of 10 mm, and the mixture was polymerized by performing heating in a polymerization tank using hot water as a heat medium at 60°C for 5 hours and then using air as a heat medium at 120°C for 5 hours, thereby obtaining a methacrylic resin sheet (Tg: 119°C, viscosity average molecular weight: 3,700,000, weight average molecular weight: 4,000,000).

(2) Production of molded article by stretching

A 100 $\mu$m-thick polypropylene sheet A was placed, and a sample obtained by cutting out the methacrylic resin sheet obtained in (1) above into a size of 60 mm $\times$ 60 mm was installed on the polypropylene sheet A. Further, a 100 $\mu$m-thick polypropylene sheet A was placed on the sample, and heating was performed in a constant temperature bath at 100°C for 40 minutes. Next, press stretching was performed to a thickness of 3 mm using a press (single-acting compression molding machine NSF-70 type, clamping pressure of 70 tons, manufactured by Shinto Metal Industries, Ltd.) in which a die was heated to 100°C. In addition, immediately after stretching, water was passed through the die of the press to cool the die, and cooling was performed to 50°C for 6 minutes while applying a press load. The sample cooled to 50°C was removed, and two polypropylene sheets A were peeled off and removed to obtain a stretched methacrylic resin sheet, thereby obtaining a biaxially oriented molded article.

(3) Production of molded article including holding step

The obtained press stretched sheet was sandwiched between 100 $\mu$m-thick polypropylene sheets A and installed in a press (a vulcanizing press No. 288 for a test, clamping pressure of 30 tons, manufactured by Toyo Seiki Seisaku-sho, Ltd.) in which a die was heated to 80°C, and a load of 1 MPa was held for 30 minutes (holding step). Thereafter, water was passed through the die of the press to cool the die, and cooling was performed to 50°C for 6 minutes while applying a press load. The sample cooled to 50°C was removed, and two polypropylene sheets A were peeled off and removed to obtain a molded article subjected to the holding step.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 130 MPa.

<Example 9>

(1) Production of methacrylic resin sheet

84.9 parts by mass of methyl methacrylate (MMA), 15 parts by mass of methacrylic acid (MAA), and 0.05 parts by mass of 2,2'-azobisisobutyronitrile (AIBN) and 0.05 parts by mass of tert-butylperoxy 2-ethylhexanoate as a polymerization initiator were mixed with each other to obtain a mixture. Next, the obtained mixture was poured into a cell composed of two glass plates and a soft polyvinyl chloride gasket and having a gap interval of 10 mm, and the mixture was polymerized by performing heating in a polymerization tank using air as a heat medium at 50°C for 15 hours, at 70°C for 1 hour, and then at 120°C for 2 hours, thereby obtaining a methacrylic resin sheet (Tg: 136°C, weight average molecular weight: 550,000).

(2) Production of molded article by stretching

A 100 $\mu$m-thick polypropylene sheet A was placed, and a sample obtained by cutting out the methacrylic resin sheet obtained in (1) above into a size of 60 mm $\times$ 60 mm was installed on the polypropylene sheet A. Further, a 100 $\mu$m-thick polypropylene sheet A was placed on the sample, and heating was performed in a constant temperature bath at 120°C for 40 minutes. Next, press stretching was performed to a thickness of 3 mm using a press (single-acting compression molding machine NSF-70 type, clamping pressure of 70 tons, manufactured by Shinto Metal Industries, Ltd.) in which a die was heated to 120°C. In addition, immediately after stretching, water was passed through the die of the press to cool the die, and cooling was performed to 50°C for 6 minutes while applying a press load. The sample cooled to 50°C was removed, and two polypropylene sheets A were peeled off and removed to obtain a stretched methacrylic resin sheet, thereby obtaining a biaxially oriented molded article.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 148 MPa. In addition, a shrinkage temperature of the obtained molded article was 70°C.

<Example 10>

A molded article was obtained in the same manner as that of Example 9, except that heating was performed in a constant temperature bath at 140°C for 40 minutes and press stretching was performed to a thickness of 3 mm by a press in which a die was heated to 140°C.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 150 MPa.

<Example 11>

(1) Production of methacrylic resin sheet

84.9 parts by mass of methyl methacrylate (MMA), 15 parts by mass of methacrylic acid (MAA), and 0.05 parts by mass of 2,2'-azobisisobutyronitrile (AIBN) and 0.05 parts by mass of tert-butylperoxy 2-ethylhexanoate as a polymerization initiator were mixed with each other to obtain a mixture. Next, the obtained mixture was poured into a cell composed of two glass plates and a soft polyvinyl chloride gasket and having a gap interval of 10 mm, and the mixture was polymerized by performing heating in a polymerization tank using air as a heat medium at 50°C for 15 hours, at 70°C for 1 hour, and then at 120°C for 2 hours, thereby obtaining a methacrylic resin sheet (Tg: 136°C, weight average molecular weight: 550,000).

(2) Production of molded article by stretching

A 100 $\mu$m-thick polypropylene sheet A was placed, and a sample obtained by cutting out the methacrylic resin sheet obtained in (1) above into a size of 60 mm $\times$ 60 mm was installed on the polypropylene sheet A. Further, a 100 $\mu$m-thick polypropylene sheet A was placed on the sample, and heating was performed in a constant temperature bath at 100°C for 40 minutes. Next, press stretching was performed to a thickness of 3 mm using a press (single-acting compression molding machine NSF-70 type, clamping pressure of 70 tons, manufactured by Shinto Metal Industries, Ltd.) in which a die was heated to 100°C. In addition, immediately after stretching, water was passed through the die of the press to cool the die, and cooling was performed to 50°C for 6 minutes while applying a press load. The sample cooled to 50°C was removed, and two polypropylene sheets A were peeled off and removed to obtain a stretched methacrylic resin sheet, thereby obtaining a biaxially oriented molded article.

(3) Production of molded article including holding step

The obtained press stretched sheet was sandwiched between 100 $\mu$m-thick polypropylene sheets A and installed in a press (a vulcanizing press No. 288 for a test, clamping pressure of 30 tons, manufactured by Toyo Seiki Seisaku-sho, Ltd.) in which a die was heated to 80°C, and a load of 1 MPa was held for 30 minutes (holding step). Thereafter, water was passed through the die of the press to cool the die, and cooling was performed to 50°C for 6 minutes while applying a press load. The sample cooled to 50°C was removed, and two polypropylene sheets A were peeled off and removed to obtain a molded article subjected to the holding step.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 147 MPa.

<Example 12>

The press stretched sheet obtained in Example 9 was sandwiched between 100 $\mu$m-thick polypropylene sheets A and installed in a press (a vulcanizing press No. 288 for a test, clamping pressure of 30 tons, manufactured by Toyo Seiki Seisaku-sho, Ltd.) in which a die was heated to 80°C, and a load of 1 MPa was held for 30 minutes (holding step). Thereafter, water was passed through the die of the press to cool the die, and cooling was performed to 50°C for 6 minutes while applying a press load. The sample cooled to 50°C was removed, and two polypropylene sheets A were peeled off and removed to obtain a molded article subjected to the holding step.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 149 MPa.

<Example 13>

A molded article was obtained in the same manner as that of Example 12, except that the temperature of the die in the holding step was 100°C.
A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 146 MPa. In addition, a shrinkage temperature of the obtained molded article was 99°C.

<Example 14>

A molded article was obtained in the same manner as that of Example 12, except that the temperature of the die in the holding step was 120°C.
A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 135 MPa. In addition, a shrinkage temperature of the obtained molded article was 100°C or higher.

<Example 15>

The press stretched sheet obtained in Example 10 was sandwiched between 100 $\mu$m-thick polypropylene sheets A and installed in a press (a vulcanizing press No. 288 for a test, clamping pressure of 30 tons, manufactured by Toyo Seiki Seisaku-sho, Ltd.) in which a die was heated to 80°C, and a load of 1 MPa was held for 30 minutes (holding step). Thereafter, water was passed through the die of the press to cool the die, and cooling was performed to 50°C for 6 minutes while applying a press load. The sample cooled to 50°C was removed, and two polypropylene sheets A were peeled off and removed to obtain a molded article subjected to the holding step.
A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 148 MPa.

<Example 16>

A molded article was obtained in the same manner as that of Example 15, except that the temperature of the die in the holding step was 100°C.
A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 149 MPa.

<Example 17>

A molded article was obtained in the same manner as that of Example 15, except that the temperature of the die in the holding step was 120°C.
A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 143 MPa.

<Example 18>

The press stretched sheet obtained in Example 7 was sandwiched between 100 $\mu$m-thick polypropylene sheets A and installed in a press (a vulcanizing press No. 288 for a test, clamping pressure of 30 tons, manufactured by Toyo Seiki Seisaku-sho, Ltd.) in which a die was heated to 90°C, and a load of 1 MPa was held for 120 minutes (holding step). Thereafter, water was passed through the die of the press to cool the die, and cooling was performed to 50°C for 6 minutes while applying a press load. The sample cooled to 50°C was removed, and two polypropylene sheets A were peeled off and removed to obtain a molded article subjected to the holding step.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 136 MPa. In addition, a shrinkage temperature of the obtained molded article was 86°C.

<Comparative Example 1>

A molded article was obtained in the same manner as that of Example 4, except that the obtained mixture was poured into a cell composed of two glass plates and a soft polyvinyl chloride gasket and having a gap interval of 4 mm, and the mixture was polymerized by performing heating in a polymerization tank using air as a heat medium at 60°C for 6 hours and then at 120°C for 40 minutes, thereby obtaining a methacrylic resin sheet (Tg: 114°C, viscosity average molecular weight: 1,200,000, weight average molecular weight: 2,300,000).

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1.

<Comparative Example 2>

A molded article was obtained in the same manner as that of Example 1, except that heating was performed in a constant temperature bath at 140°C for 40 minutes and press stretching was performed to a thickness of 3 mm by a press in which a die was heated to 140°C.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1.

<Comparative Example 3>

A molded article was obtained in the same manner as that of Example 2, except that heating was performed in a constant temperature bath at 140°C for 40 minutes and press stretching was performed to a thickness of 3 mm by a press in which a die was heated to 140°C.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1.

<Comparative Example 4>

99.9 parts by mass of methyl methacrylate (MMA) and 0.1 parts by mass of 2,2'-azobisisobutyronitrile (AIBN) as a polymerization initiator were mixed with each other to obtain a mixture. Next, the obtained mixture was poured into a cell composed of two glass plates and a soft polyvinyl chloride gasket and having a gap interval of 3 mm, and the mixture was polymerized by performing heating in a polymerization tank using air as a heat medium at 60°C for 3 hours and then at 120°C for 40 minutes, thereby obtaining a methacrylic resin sheet (Tg: 114°C, viscosity molecular weight: 1,200,000, weight average molecular weight: 2,300,000).

A peak position change rate r, a peak position Q1, an absolute value of a degree of orientation in a thickness direction, a flexural modulus, a Charpy impact value, and a coefficient of linear expansion in an in-plane direction of the obtained molded article (unstretched methacrylic resin sheet) were evaluated. The results are shown in Table 1.

A molded article was obtained in the same manner as that of Examples 9, except that press stretching was not performed.

A peak position change rate r, a peak position Q1, an absolute value of a degree of orientation in a thickness direction, a flexural modulus, a Charpy impact value, and a coefficient of linear expansion in an in-plane direction of the obtained molded article were evaluated. The results are shown in Table 1. In addition, a flexural strength in a bending test was 118 MPa. In addition, a shrinkage temperature of the obtained molded article was 100°C or higher.

[Table 1]

| | Amorphous resin | | | Stretching condition | | Holding step condition | | Peak position change rate r (%) | Peak position Q1 (nm$^{-1}$) | Absolute value of degree of orientation in thickness direction | flexural modulus (MPa) | Charpy impact value (kJ/m$^2$) | Coefficient of linear expansion (ppm/K) |
|---|---|---|---|---|---|---|---|---|---|---|---|---|---|
| | Viscosity average molecular weight (ten thousand) | Weight average molecular weight (ten thousand) | Tg (°C) | Temperature (°C) | Ratio (times) | Temperature (°C) | Pressure (MPa) | | | | | | |
| Example 1 | 120 | 230 | 114 | 80 | 2.0 | - | - | 2.8 | 9.71 | 0.30 | 3790 | 73 | 58 |
| Example 2 | 120 | 230 | 114 | 80 | 2.7 | - | - | 3.1 | 9.74 | 0.32 | 3860 | 73 | 50 |
| Example 3 | 120 | 230 | 114 | 80 | 3.3 | - | - | 3.0 | 9.73 | 0.28 | 3850 | >80 | 47 |
| Example 4 | 120 | 230 | 114 | 100 | 2.7 | - | - | 2.3 | 9.66 | 0.27 | 3800 | >80 | 53 |
| Example 5 | 120 | 230 | 114 | 100 | 3.3 | - | - | 2.4 | 9.68 | 0.28 | 4000 | 71 | 47 |
| Example 6 | 6 | 13 | 110 | 100 | 3.3 | - | - | 1.2 | 9.57 | 0.24 | 3610 | 79 | 50 |
| Example 7 | 370 | 400 | 119 | 120 | 3.3 | - | - | 2.7 | 9.71 | 0.30 | 3800 | >80 | 53 |
| Example 8 | 370 | 400 | 119 | 100 | 3.3 | 80 | 1 | 2.6 | 9.69 | 0.22 | 3520 | >80 | 53 |
| Example 9 | - | 55 | 136 | 120 | 3.3 | - | - | 3.3 | 9.96 | 0.26 | 3780 | >80 | 49 |
| Example 10 | - | 55 | 136 | 140 | 3.3 | - | - | 1.2 | 9.76 | 0.18 | 3770 | >80 | 57 |
| Example 11 | - | 55 | 136 | 100 | 3.3 | 80 | 1 | 4.1 | 10.04 | 0.31 | 4040 | 72 | 50 |
| Example 12 | - | 55 | 136 | 120 | 3.3 | 80 | 1 | 2.6 | 9.89 | 0.27 | 3810 | >80 | 51 |
| Example 13 | - | 55 | 136 | 120 | 3.3 | 100 | 1 | 1.3 | 9.77 | 0.23 | 3740 | >80 | 52 |
| Example 14 | - | 55 | 136 | 120 | 3.3 | 120 | 1 | 1.2 | 9.76 | 0.12 | 3580 | >80 | 64 |
| Example 15 | - | 55 | 136 | 140 | 3.3 | 80 | 1 | 1.4 | 9.78 | 0.18 | 3610 | >80 | 56 |
| Example 16 | - | 55 | 136 | 140 | 3.3 | 100 | 1 | 1.2 | 9.76 | 0.18 | 3630 | >80 | 56 |
| Example 17 | - | 55 | 136 | 140 | 3.3 | 120 | 1 | 1.4 | 9.78 | 0.15 | 3610 | >80 | 57 |
| Example 18 | 370 | 400 | 119 | 120 | 3.3 | 90.0 | 1.0 | 2.7 | 9.69 | 0.22 | 3540 | >80 | 50 |
| Comparative Example 1 | 120 | 230 | 114 | 100 | 1.3 | - | - | 0.7 | 9.52 | 0.24 | 3260 | 35 | 65 |
| Comparative Example 2 | 120 | 230 | 114 | 140 | 2.0 | - | - | 0.6 | 9.51 | 0.07 | 3320 | 66 | 83 |

EP 3 882 302 A1

(continued)

| | Amorphous resin | | | Stretching condition | | Holding step condition | | Peak position change rate r (%) | Peak position Q1 (nm$^{-1}$) | Absolute value of degree of orientation in thickness direction | flexural modulus (MPa) | Charpy impact value (kJ/ m$^2$) | Coefficient of linear expansion (ppm/K) |
|---|---|---|---|---|---|---|---|---|---|---|---|---|---|
| | Viscosity average molecular weight (ten thousand) | Weight average molecular weight (ten thousand) | Tg (°C) | Temperature (°C) | Ratio (times) | Temperature (°C) | Pressure (MPa) | | | | | | |
| Comparative Example 3 | 120 | 230 | 114 | 140 | 2.7 | - | - | 0.9 | 9.54 | 0.09 | 3150 | >80 | 82 |
| Comparative Example 4 | 120 | 230 | 114 | - | - | - | - | 0.0 | 9.45 | 0.00 | 3100 | 16 | 80 |
| Comparative Example 5 | 370 | 400 | 119 | - | - | - | - | 0 | 9.45 | 0 | 3110 | 17 | 76 |

**EP 3 882 302 A1**

">80" in Table 1 refers to that the average of the evaluation results obtained by excluding the unbroken samples of five test samples is 80 kJ/m$^2$, and the Charpy impact value of the present sample is more than 80 kJ/m$^2$.

The molded articles of Examples 1 to 18 were excellent in the flexural modulus (rigidity) and impact resistance, unlike the molded articles of Comparative Examples 1 to 5. In addition, the coefficient of linear expansion in the in-plane direction of each of the molded articles of Examples 1 to 18 was smaller than that of each of the molded articles of Comparative Examples 1 to 5.

**Claims**

1. A molded article comprising an amorphous resin,
   wherein a peak position change rate r (%) of the molded article defined by the following Equation (1) is 1 or more,

$$\text{Peak position change rate r (\%)} = 100 \times (Q1-Q2)/Q2 \quad (1)$$

   in Equation (1),

   Q1 is a peak position (nm$^{-1}$) of the molded article determined by a wide angle X-ray diffraction method, and Q2 is a peak position (nm$^{-1}$) of a reference molded article determined by the wide angle X-ray diffraction method, the reference molded article is a molded article obtained by heat-treating the molded article at (Tg + 30)°C for 1 hour, in which Tg(°C) is a glass transition temperature of the amorphous resin, and
   the peak position is a peak derived from the amorphous resin in a scattering vector magnitude Q-intensity profile calculated from a diffraction image obtained by a transmission method and measured by the wide angle X-ray diffraction method and obtained after background correction and transmittance correction, and the peak position is a value of Q at a peak at which Q is the smallest among peaks at which Q is in a range of 5 nm$^{-1}$ to 25 nm$^{-1}$.

2. The molded article according to claim 1, wherein an absolute value of a degree of orientation in a thickness direction of the molded article is 0.02 or more.

3. The molded article according to claim 1 or 2, wherein a viscosity average molecular weight of the amorphous resin is 1,000,000 or more.

4. The molded article according to claim 1 or 2, wherein a weight average molecular weight of the amorphous resin is 400,000 or more.

5. The molded article according to any one of claims 1 to 4, wherein the amorphous resin is a (meth)acrylic resin.

6. The molded article according to claim 5, wherein the (meth)acrylic resin has a structural unit derived from a methacrylic acid ester.

7. The molded article according to claim 6, wherein the (meth)acrylic resin further has a structural unit derived from a (meth)acrylic acid.

8. The molded article according to any one of claims 1 to 7, wherein the amorphous resin does not have a structural unit derived from a silica particle having a polymerizable functional group.

9. A molded article comprising a (meth)acrylic resin,

   wherein a peak position Q1 of the molded article determined by a wide angle X-ray diffraction method is 9.55 nm$^{-1}$ or more, and
   the peak position Q1 (nm$^{-1}$) is a peak derived from the (meth)acrylic resin in a scattering vector magnitude Q-intensity profile calculated from a diffraction image obtained by a transmission method and measured by the wide angle X-ray diffraction method and obtained after background correction and transmittance correction, and the peak position Q1 (nm$^{-1}$) is a value of Q at a peak at which Q is the smallest among peaks at which Q is in a range of 5 nm$^{-1}$ to 25 nm$^{-1}$.

10. The molded article according to claim 9, wherein the (meth)acrylic resin does not have a structural unit derived from a silica particle having a polymerizable functional group.

11. A production method of a molded article, the method comprising:

a step of preparing a laminate including a first layer formed of a first thermoplastic resin, a second layer formed of a second thermoplastic resin which is an amorphous resin, and a third layer formed of a third thermoplastic resin in this order;
a step of performing a press stretching treatment on the laminate at a temperature of (Tg + 20)°C or lower [Tg is a glass transition temperature of the second thermoplastic resin]; and
a step of peeling and removing the first layer and the third layer.

12. The production method according to claim 11, further comprising a holding step of holding the molded article obtained by the step of performing the press stretching treatment at a temperature lower than a press stretching temperature and higher than the glass transition temperature of the second thermoplastic resin.

13. The production method according to claim 11 or 12, wherein the second thermoplastic resin is a (meth)acrylic resin.

## INTERNATIONAL SEARCH REPORT

| International application No. |
|---|
| PCT/JP2019/042562 |

| A. CLASSIFICATION OF SUBJECT MATTER |
|---|
| C08J 5/00(2006.01)i; G01N 23/2055(2018.01)i; G01N 23/207(2018.01)i<br>FI: C08J5/00 CEY; G01N23/207; G01N23/2055 320 |
| According to International Patent Classification (IPC) or to both national classification and IPC |

| B. FIELDS SEARCHED |
|---|
| Minimum documentation searched (classification system followed by classification symbols)<br>C08J5/00; GOIN23/2055; G01N23/207 |

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

| Electronic data base consulted during the international search (name of data base and, where practicable, search terms used) |
|---|
|  |

| C. DOCUMENTS CONSIDERED TO BE RELEVANT | | |
|---|---|---|
| Category* | Citation of document, with indication, where appropriate, of the relevant passages | Relevant to claim No. |
| X | JP 56-30809 A (ASAHI-DOW CO., LTD.) 28.03.1981 (1981-03-28) claims, page 3, upper left column, line 1 to lower right column, line 5, page 4, upper right column, bottom line to lower left column, line 4 from the bottom, examples, drawings | 1-2,5-6,8-10 |
| X<br>Y | JP 1-275I09 A (ASAHI KASEI INDUSTRY CO., LTD.) 02.11.1989 (1989-11-02) claims, page 2, upper right column, lines 12-15, page 3, upper left column line 1 to lower left column, line 9, examples | 1-6,8-11,13<br>3-4 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 January 2020 (17.01.2020) | 28 January 2020 (28.01.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2019/042562

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2018/139459 A1 (SUMITOMO CHEMICAL CO., LTD.) 02.08.2018 (2018-08-02) claims, paragraphs [0009]-[0011], [0031], [0062]-[0072], examples | 1-2,5-7,9, |
| Y | | 11-13 |
| | | 3-4,7 |
| X | WO 2018/135523 A1 (SUMITOMO CHEMICAL CO., LTD.) 26.07.2018 (2018-07-26) claims, paragraphs [0030], [0066], [0077]-[0082], examples | 1-6,8-10 |
| Y | | 3-4,7 |

Form PCT/ISA/210 (continuation of second sheet) (January 2015)

## INTERNATIONAL SEARCH REPORT
Information on patent family members

International application No.

PCT/JP2019/042562

| Patent Documents referred in the Report | Publication Date | Patent Family | Publication Date |
|---|---|---|---|
| JP 56-30809 A | 28 Mar. 1981 | (Family: none) | |
| JP 1-275109 A | 02 Nov. 1989 | (Family: none) | |
| WO 2018/139459 A1 | 02 Aug. 2018 | US 2019/0322856 A1 claims, paragraphs [0034]-[0041], [0081], [0120]-[0139], examples | |
| WO 2018/135523 A1 | 26 Jul. 2018 | US 2019/0322815 A1 claims, paragraphs [0068]-[0069], [0139]-[0140], [0175]-[0187], examples | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004051681 A

**Non-patent literature cited in the description**

- **TAKESHI KIKUTANI ; HIROSHI ITO.** Introduction to high-order structural analysis of plastic molded articles. 2006, 72-74

- 42. Birefringence and orientation function. *Oji Scientific Instruments,* August 2012, http://www.ojikeisoku.co.jp/products/kobra/reference.html